# EUROPEAN PATENT SPECIFICATION

(11) **EP 3 784 441 B1**
(45) Date of publication and mention of the grant of the patent: **02.04.2025**
(21) Application number: 19716880.0
(22) Date of filing: 08.04.2019
(51) Int. Cl.: B25B 21/00, B25B 23/147

(54) **ELECTRIC POWER TOOL FOR TIGHTENING SCREW JOINTS**
ELEKTROWERKZEUG ZUM ANZIEHEN VON SCHRAUBVERBINDUNGEN
OUTIL ÉLECTRIQUE POUR LE SERRAGE DE JOINTS À VIS

(30) Priority: 26.04.2018 SE 1830145
(43) Date of publication of application: 03.03.2021
(73) Proprietor: Atlas Copco Industrial Technique AB, 105 23 Stockholm (SE)
(72) Inventor: RÖNBLOM, Johan, 132 37 Saltsjö-Boo (SE); LARSSON, Lisa Erika, 116 39 Stockholm (SE); LANTZ, Göran Sivert, 165 75 Hässelby (SE); NORDSTRÖM, Taru Johanna, 138 35 Älta (SE)
(86) International application number: PCT/EP2019/058744
(87) International publication number: WO 2019/206609

(56) References cited:
- EP-A1- 0 092 736
- EP-A2- 0 164 574
- WO-A1-2015/097093
- WO-A1-2016/156388
- WO-A1-2019/201589

## Description

The present disclosure relates to an electric power tool for tightening screw joints. In particular to an electric power tool with increased accuracy.

### Background

In industrial use of torque delivering electric power tools such as power wrenches and nutrunners that are used for tightening joints it is important to monitor the applied torque in order to verify that the joints are fastened to a satisfactory degree. It is often desired to install a predetermined clamp force into a joint. Normally it is however difficult to monitor the clamp force and it is therefore common practice to instead control a tightening so as to install a specific target torque in a joint.

Document WO 2016/156388 A1 discloses an electric power tool according to the preamble of claim 1.

A difficulty related to the monitoring of a delivered torque is that there are losses due to friction in the joint and due to gear ripple and the like inside the tool that affects the accuracy of the monitoring values in an unpredictable manner. The friction in a joint may vary largely between different joints, but it may be presumed to be constant for a specific joint at specific conditions, and there are manners of estimating the friction for a specific joint, both by empiric testing or by real time monitoring during the tightening of a joint.

The variations that are due to gear ripple and the like inside the electric power tool are more difficult to predict. The variations that due to gear ripple also vary with the condition of the electric power tool. When the condition of the electric power tool is lowered the gear ripple of the electric power tool often increase.

Hence, there is a need of an improved electric power tool which is adapted to deliver a precise output torque and which is adapted to detect when the electric power tool need service.

### Summary of the invention

An object of the invention is to provide an electric power tool for delivering a precise output torque with less variations due to gear ripple and the like. This object is achieved with an electric power tool according to claim 1.

Thus, a first aspect of the present disclosure relates to an electric power tool for tightening screw joints. The electric power tool comprises a housing. The housing encloses an electric motor and an angle gear comprising an input bevel gear drivingly connected to the electric motor and an output bevel gear drivingly connected to an output shaft of the electric power tool. The housing further encloses a back torque transducer arranged to measure a back torque reaction value before the input bevel gear. The electric power tool further comprise a front torque transducer arranged to measure a front torque reaction value after the output bevel gear.

Other features and advantages of the invention will be apparent from the figures and from the detailed description of the shown embodiment.

### Short description of the drawings

In the following detailed description reference is made to the accompanying drawings, of which:

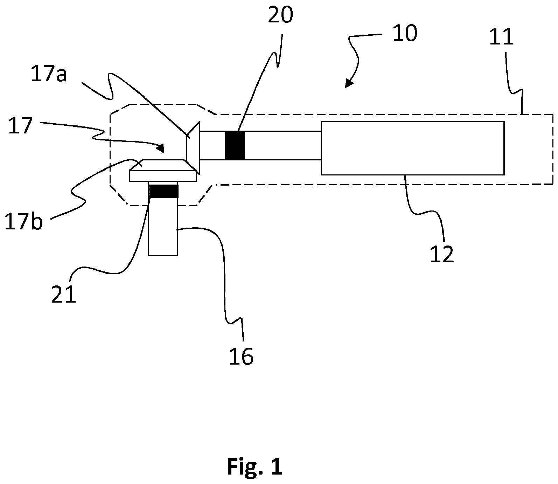

**Fig. 1** is a schematic view of an electric power tool 10 according to a specific embodiment of the invention.

### Detailed description of the shown embodiment of the invention

In fig. 1 an electric power tool 10 according to a specific embodiment of the invention is schematically shown. The electric power tool 10 comprises a housing 11. The housing 11 encloses an electric motor 12. The housing 11 further encloses an angle gear 17 comprising a input bevel gear 17a drivingly connected to the electric motor 12 and a output bevel gear 17b drivingly connected to an output shaft 16 of the electric power tool 10. The housing 11 yet further encloses a back torque transducer 20 arranged to measure a back torque reaction value before the input bevel gear 17a. Stated differently, in one embodiment, the back torque transducer 20 is arranged to measure the back torque reaction value between the motor 12 and the the input bevel gear 17a. Also enclosed by the housing 11 is a front torque transducer 21 arranged to measure a front torque reaction value after the output bevel gear 17b. Stated differently, in one embodiment, the front torque transducer 21 is arranged to measure the front torque reaction value that is tranfered from the output bevel gear 17b.

A general idea according to exemplary embodiments of the present disclosure is to provide an electric power tool 10 were both the back torque transducer 20 and the front torque transducer 21 are enclosed in the housing 11. One advantage is that the electric power tool 10 can be made handheld since all the parts are encloses in the housing. Another advantage by having all the elements enclosed in that housing 11 is easier installation and logistics since all the parts are enclosed in the housing 11.

The back torque transducer 20 is provided on the back side of the angle gear 17. And the front torque transducer 21 is provided on the front side of the angel gear 17. By having two torque transducers 20, 21, one on each side of the angel gear 17, it is possible to get a more accurate torque result. This among others since the front torque transducer 21 more accurately can measure the output torque on the output shaft 16.

According to one exemplary embodiment of the present disclosure the electric power tool 10 is a hand held electric power tool 10. According to one exemplary embodiment the housing 11 of the electric power tool 10 is shaped to be ergonomic to hold for an operator. An advantage with this embodiment is that the electric power tool 10 becomes more ergonomic. The risk for injuries of the operator is thereby reduced.

According to the invention the front torque transducer 21 comprises a front torque transferring element (not shown) arranged to transfer reaction torque to the housing 11 and carrying front strain measuring sensors (not shown) arranged to generate a front torque transducer value.

According to the invention the back torque transducer 20 comprises a back torque transferring element (not shown) arranged to transfer back reaction torque to the housing 11 and carrying back strain measuring sensors (not shown) arranged to generate a back torque transducer value.

According to the invention the electric power tool 10 comprises a back amplifier arranged to amplify the back torque transducer value and arranged close to the back strain measuring sensors.

According to the invention the electric power tool 10, further comprises a front amplifier arranged to amplify the front torque transducer value and arranged close to the front strain measuring sensors.

According to another exemplary embodiment of the present disclosure the electric power tool 10 is further operative to terminate a tightening when the front torque transducer value and the back torque transducer value exceeds a torque difference limit, where the torque difference limit is the difference between the front torque transducer value and the back torque transducer value.

In yet another exemplary embodiment of the present disclosure the electric power tool 10 is further operative to retrieve the torque difference limit.

The present disclosure further relates to an electric power tool controller (not shown) configured to control the electric power tool 10 according to any of the described exemplary embodiments.

In one exemplary embodiment of the present disclosure the electric power tool controller is operative to control a tightening performed by the electric power tool 10 based on the front torque transducer value or the back torque transducer value and monitor the tightening based on the front torque transducer value or the back torque transducer value not used to control the tightening.

According to another exemplary embodiment of the present disclosure the electric power tool controller is further operative to terminate a tightening when the front torque transducer value and the back torque transducer value exceeds a torque difference limit, where the torque difference limit is the difference between the front torque transducer value and the back torque transducer value.

In yet another exemplary embodiment of the present disclosure the electric power tool controller is further operative to retrieve the torque difference limit.

According to another exemplary embodiment of the present disclosure the electric power tool further comprises the electric power tool controller according to any of the described embodiments.

The present disclosure also relates to a computer readable storage medium comprising a computer program which when run in the electric power tool controller causes the electric power tool controller to be operative according to claims 4 to 7

Above, the invention has been described with reference to specific embodiments. The invention is however not limited to these embodiments. It is obvious to a person skilled in the art that the invention comprises further embodiments within its scope of protection, which is defined by the following claims.

## Claims

1. Electric power tool (10) for tightening screw joints, the electric power tool (10) comprises a housing (11), the housing (11) enclosing:
an electric motor (12);
an angle gear (17) comprising a input bevel gear (17a) drivingly connected to the electric motor (12) and a output bevel gear (17b) drivingly connected to an output shaft (16) of the electric power tool (10);
a back torque transducer (20) arranged to measure a back torque reaction value before the input bevel gear (17a) **characterised in that** the tool further comprises
a back amplifier arranged to amplify the back torque transducer value and arranged close to the back strain measuring sensors;
a front torque transducer (21) arranged to measure a front torque reaction value after the output bevel gear (17b), and wherein the front torque transducer (21) comprises a front torque transferring element arranged to transfer reaction torque to the housing and carrying front strain measuring sensors arranged to generate the front torque transducer value and a front amplifier arranged to amplify the front torque transducer value and arranged close to the front strain measuring sensors.

2. The electric power tool (10) according to claim 1, whereby the electric power tool (10) is a hand held electric power tool.

3. The electric power tool (10) according to any of claim 1 to 2, wherein the back torque transducer (20) comprises a back torque transferring element arranged to transfer back reaction torque to the housing and carrying back strain measuring sensors arranged to generate the back torque transducer value.

4. An electric power tool controller configured to control the electric power tool (10) according to any of claims 1 to 3.

5. The electric power tool controller according to claim 4, operative to control a tightening performed by the electric power tool (10) based on the front torque transducer value or the back torque transducer value and monitor the tightening based on the front torque transducer value or the back torque transducer value not used to control the tightening.

6. The electric power tool controller according to any of claims 4 to 5, further operative to terminate a tightening when the front torque transducer value and the back torque transducer value exceeds a torque difference limit.

7. The electric power tool controller according to claim 6, further operative to retrieve the torque difference limit.

8. The electric power tool (10) according to any of claim 1 to 3, further comprising the electric power tool controller according to any of claims 5 to 8.

9. Computer readable storage medium comprising a computer program which when run in the electric power tool controller causes the electric power tool controller to be operative according to any of claims 4 to 7.

## Patentansprüche

1. Elektrowerkzeug (10) zum Anziehen von Schraubverbindungen, wobei das Elektrowerkzeug (10) ein Gehäuse (11) umfasst, wobei das Gehäuse (11) umschließt:
einen Elektromotor (12);
ein Winkelgetriebe (17), umfassend ein Eingangskegelradgetriebe (17a), das mit dem Elektromotor (12) antriebsverbunden ist, und ein Ausgangskegelradgetriebe (17b), das mit einer Ausgangswelle (16) des Elektrowerkzeugs (10) antriebsverbunden ist;
einen hinteren Drehmomentaufnehmer (20), der angeordnet ist, um einen hinteren Drehmomentreaktionswert vor dem Eingangskegelradgetriebe (17a) zu messen, **dadurch gekennzeichnet, dass** das Werkzeug ferner einen hinteren Verstärker umfasst, der angeordnet ist, um den Wert des hinteren Drehmomentaufnehmers zu verstärken und nahe der hinteren Dehnungsmesssensoren angeordnet ist;
einen vorderen Drehmomentaufnehmer (21), der angeordnet ist, um einen vorderen Drehmomentreaktionswert nach dem Ausgangskegelrad (17b) zu messen, und wobei der vordere Drehmomentaufnehmer (21) ein vorderes Drehmomentübertragungselement, das angeordnet ist, um ein Reaktionsdrehmoment auf das Gehäuse zu übertragen, und vordere Dehnungsmesssensoren trägt, die angeordnet sind, um den Wert des vorderen Drehmomentaufnehmers zu erzeugen, und einen vorderen Verstärker umfasst, der angeordnet ist, um den Wert des vorderen Drehmomentaufnehmers zu verstärken und nahe der vorderen Dehnungsmesssensoren angeordnet ist.

2. Elektrowerkzeug (10) nach Anspruch 1, wobei das Elektrowerkzeug (10) ein handgeführtes Elektrowerkzeug ist.

3. Elektrowerkzeug (10) nach einem der Ansprüche 1 bis 2, wobei der hintere Drehmomentaufnehmer (20) ein hinteres Drehmomentübertragungselement umfasst, das angeordnet ist, um ein hinteres Reaktionsdrehmoment auf das Gehäuse zu übertragen, und hintere Dehnungsmesssensoren trägt, die angeordnet sind, um den Wert des hinteren Drehmomentaufnehmers zu erzeugen.

4. Elektrowerkzeugsteuerung, die konfiguriert ist, um das Elektrowerkzeug (10) nach einem der Ansprüche 1 bis 3 zu steuern.

5. Elektrowerkzeugsteuerung nach Anspruch 4, die betriebsfähig ist, um ein Anziehen, das durch das Elektrowerkzeug (10) durchgeführt wird, basierend auf dem Wert des vorderen Drehmomentaufnehmers oder dem Wert des hinteren Drehmomentaufnehmers zu steuern und das Anziehen basierend auf dem Wert des vorderen Drehmomentaufnehmers oder dem Wert des hinteren Drehmomentaufnehmers zu überwachen, der nicht verwendet wird, um das Anziehen zu steuern.

6. Elektrowerkzeugsteuerung nach einem der Ansprüche 4 bis 5, die ferner betriebsfähig ist, um ein Anziehen zu beenden, wenn der Wert des vorderen Drehmomentaufnehmers und der Wert des hinteren Drehmomentaufnehmers eine Drehmomentdifferenzgrenze überschreiten.

7. Elektrowerkzeugsteuerung nach Anspruch 6, die ferner betriebsfähig ist, um die Drehmomentdifferenzgrenze abzurufen.

8. Elektrowerkzeug (10) nach einem der Ansprüche 1 bis 3, ferner umfassend die Elektrowerkzeugsteuerung nach einem der Ansprüche 5 bis 8.

9. Computerlesbares Speichermedium, umfassend ein Computerprogramm, das, wenn es auf der Elektrowerkzeugsteuerung ausgeführt wird, die Elektrowerkzeugsteuerung veranlasst, nach einem der Ansprüche 4 bis 7 betriebsfähig zu sein.

## Revendications

1. Outil électrique (10) permettant de serrer des assemblage par vissage, l'outil électrique (10) comprend un boîtier (11), le boîtier (11) renfermant :
un moteur électrique (12) ;
un engrenage angulaire (17) comprenant un engrenage conique d'entrée (17a) relié par entraînement au moteur électrique (12) et un engrenage conique de sortie (17b) relié par entraînement à un arbre de sortie (16) de l'outil électrique (10) ;
un capteur de couple arrière (20) agencé pour mesurer une valeur de réaction de couple arrière avant l'engrenage conique d'entrée (17a) **caractérisé en ce que** l'outil comprend en outre un amplificateur arrière agencé pour amplifier la valeur du capteur de couple arrière et agencé à proximité des capteurs de mesure de contrainte arrière ;
un capteur de couple avant (21) agencé pour mesurer une valeur de réaction de couple avant après l'engrenage conique de sortie (17b), et dans lequel le capteur de couple avant (21) comprend un élément de transfert de couple avant agencé pour transférer le couple de réaction au boîtier et portant des capteurs de mesure de contrainte avant agencés pour générer la valeur du transducteur de couple avant et un amplificateur avant agencé pour amplifier la valeur du capteur de couple avant et agencé à proximité des capteurs de mesure de contrainte avant.

2. Outil électrique (10) selon la revendication 1, dans lequel l'outil électrique (10) est un outil électrique portatif.

3. Outil électrique (10) selon l'une quelconque des revendications 1 à 2, dans lequel le capteur de couple arrière (20) comprend un élément de transfert de couple arrière agencé pour transférer le couple de réaction arrière au boîtier et portant des capteurs de mesure de contrainte arrière agencés pour générer la valeur du capteur de couple arrière.

4. Dispositif de commande d'outil électrique configuré pour commander l'outil électrique (10) selon l'une quelconque des revendications 1 à 3.

5. Dispositif de commande d'outil électrique selon la revendication 4, permettant de commander un serrage effectué par l'outil électrique (10) en fonction de la valeur du capteur de couple avant ou de la valeur du capteur de couple arrière et de surveiller le serrage en fonction de la valeur du capteur de couple avant ou de la valeur du capteur de couple arrière non utilisée pour commander le serrage.

6. Dispositif de commande d'outil électrique selon l'une quelconque des revendications 4 à 5, permettant en outre de mettre fin à un serrage lorsque la valeur du capteur de couple avant et la valeur du capteur de couple arrière dépassent une limite de différence de couple.

7. Dispositif de commande d'outil électrique selon la revendication 6, permettant en outre de récupérer la limite de différence de couple.

8. Outil électrique (10) selon l'une quelconque des revendications 1 à 3, comprenant en outre le dispositif de commande d'outil électrique selon l'une quelconque des revendications 5 à 8.

9. Support de stockage lisible par ordinateur comprenant un programme informatique qui, lorsqu'il est exécuté dans le dispositif de commande d'outil électrique, amène le dispositif de commande d'outil électrique à fonctionner selon l'une quelconque des revendications 4 à 7.
